# EUROPÄISCHE PATENTSCHRIFT

(11) **EP 0 556 416 B1**
(45) Veröffentlichungstag und Bekanntmachung des Hinweises auf die Patenterteilung: **20.04.1994**
(21) Anmeldenummer: 92102557.3
(22) Anmeldetag: 15.02.1992
(51) Int. Cl.: H02K 5/14, H02K 9/28

(54) **Kommutatormotor, insbesondere zum Antrieb eines Waschautomaten, und Verfahren zu dessen Montage**
Commutator motor, especially for driving a washing machine and method of producing the same
Moteur à collecteur, en particulier pour une machine à laver et son procédé de fabrication

(43) Veröffentlichungstag der Anmeldung: 25.08.1993
(73) Patentinhaber: SIEMENS AKTIENGESELLSCHAFT, 80333 München (DE)
(72) Erfinder: Kutzer, Anton, W-8702 Thüngersheim (DE)

(56) Entgegenhaltungen:
- EP-A- 0 175 992
- DE-A- 3 614 970
- DE-U- 8 815 068
- GB-A- 2 222 728

## Beschreibung

Die Erfindung bezieht sich auf einen Kommutatormotor, insbesondere zum Antrieb eines Waschautomaten, und ein Verfahren zu dessen Montage gemäß Patentanspruch 1 bzw. Patentanspruch 10.

Durch die EP-B1-0 175 992 ist eine Kommutatormaschine bekannt, bei der an der Innenseite des einen Lagerschildes ein Kunststoff-Rahmen gehaltert ist, der Kastenbürstenhalter aufnimmt, die über Verbindungsleitungen in Form eines in den Kunststoff-Rahmen eingegossenen Stanzgitters mit einem, ebenfalls von dem Kunststoff-Rahmen gehalterten Anschlußstecker für eine äußere Speiseleitung verbunden sind; dadurch ergibt sich eine durch nur wenige Bauteile gekennzeichnete und für eine vorteilhafte axiale Aufbaumontage der Kommutatormaschine vorteilhafte Konstruktion.

Eine demgegenüber bei weiterhin gewährleisteter aufwandsarmer Montage gleichzeitig durch eine optimalere Kühlung der Bürsten durch bessere Wärmeabfuhr gekennzeichnete Konstruktion ist durch die Lehre des Anspruchs 1 möglich; vorteilhafte Ausgestaltungen dieser Konstruktion sind Gegenstand der Unteransprüche 2-9, ein zweckmäßiges Verfahren zur Aufbau-Montage dieses erfindungsgemäßen Motors ist Gegenstand des Anspruchs 10.

Durch die Anordnung der Bürstenanordnungen in unmittelbarer Anlage zu dem metallenen Lagerschild ist einerseits eine gute Wärmeabfuhr von den Bürstenkästen möglich und andererseits ist durch die gegenseitigen Berührungskontakte zwischen den Bürsten bzw. deren Bürstenköchern einerseits und der Leitungsebene des Kunststoff-Rahmens bei der axialen Montage des Kunststoff-Rahmens im Lagerschild eine selbsttätige elektrische Verbindung zwischen den nunmehr vom Kunststoff-Rahmen baulich getrennten Bürsten bzw. Bürstenköchern und deren Stromspeisung über die im Kunststoff-Rahmen gehaltenen Anschlußstecker bzw. Verbindungsleitungen bzw. Schaltelemente möglich.

Durch die DE-U-88 15 068 ist es zwar bekannt, zur guten Wärmeabfuhr bei einem Kommutatormotor die Bürstenköcher unter Zwischenlage einer dünnen Isolierschicht am Lagerschild zu befestigen, doch fehlen jegliche Angaben über eine Stromzuführung zu den Bürsten.

Durch die DE-A1-36 14 970 ist es bekannt zur Stromkontaktierung zwischen den Statorwicklungen und dem Kommutator senkrecht zur Motorachse einen Kontaktträger zu bringen, der statorseitige Kontaktelemente in einer Ebene senkrecht zur Motorachse verbinden soll mit bürstenseitigen Kontakten in einer dazu parallen Ebene.

Zur einfachen Bestückung der zweckmäßigerweise aus isolierendem Kunststoff gefertigten Bürstenkästen mit den Bürsten bzw. den diese aufnehmenden Bürstenköchern und deren einfache Kontaktierung mit den Verbindungsleitungen im Kunststoff- Rahmen sind nach einer Ausgestaltung der Erfindung Bürstenkästen mit einem U-förmigen Kasten-Bodenteil und einem im Kasten-Bodenteil verschließenden lagerschildseitigen Kasten-Deckelteil vorgesehen; zweckmäßigerweise ist jeweils ein eine Bürste bzw. einen Bürstenköcher aufnehmender Bürstenkasten mit einer in dessen dem Kunststoff-Rahmen zugewandten Wandteil, insbesondere in Form eines einlegbaren Einzelteils, gehalterter Kontaktfeder als Berührungskontakt zwischen der jeweiligen Bürste bzw. dem jeweiligen Bürstenköcher einerseits und dem jeweiligen Gegenkontakt (Kontaktfläche) des Kunststoff-Rahmens andererseits vorgesehen, wobei nach einer vorteilhaften Ausgestaltung der Erfindung eine lagerschildseitig bestückbare taschenförmige Kontaktaufnahme im Boden des dem Kunststoff-Rahmen zugewandten Wandteils des Bürstenkastens mit einer Durchstecköffnung in deren Boden für einen durchsteckbaren Berührungskontakt der Kontaktfeder zu dem Gegenkontakt des Kunststoff-Rahmens eingelassen ist. Dadurch ist die Kontaktfeder vor dem Bestücken des Bürstenkastens mit dem Bürstenköcher einfach in die Kontaktfederaufnahme einlegbar und anschließend durch den eingeführten Bürstenkörper sicherbar.

Als Berührungskontakt zwischen den jeweiligen Bürsten bzw. Bürstenköchern einerseits und den Verbindungsleitungen des Kunststoff-Rahmens andererseits ist in fertigungs- und montagetechnisch vorteilhafter Weise jeweils eine Kontaktfeder in Form eines in eine entsprechende Kontaktfederaufnahme im Boden des Bürstenkastenteils vor der Bestückung der Bürstenkasten mit den Bürsten bzw. Bürstenköchern einlegbare Bügelfeder vorgesehen, die mit ihren Bügelenden an den Bürsten bzw. Bürstenköchern mit ihrem durch die Durchstecköffnung lediglich reichenden Bügelrücken an dem anderen zu kontaktierenden Gegen-Bauteil des Kunststoff-Rahmens in der Betriebsendlage zwischen Kunststoff-Rahmen einerseits und Lagerschild andererseits elektrisch sicher leitend anliegt.

Um einen noch besseren Wärmeübergang zwischen der Bürste und dem Lagerschild zu erreichen, kann in bestimmten Anwendungsfällen anstelle des Kasten-Deckelteils lediglich eine elektrisch isolierende Folie zwischen der Bürste bzw. dem Bürstenköcher und dem Lagerschild zwischengelegt sein.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem axialen Teilschnittbild eine Kommutatormaschine mit im B-seitigen Lagerschild gehalterten Bürsten und lediglich, angedeutetem Kunststoff-Rahmen,
- FIG 2: eine axiale Draufsicht auf die Innenseite des Lagerschildes gemäß FIG 1 mit daran befestigten Bürsten jedoch ohne montiertem Kunststoff-Rahmen,

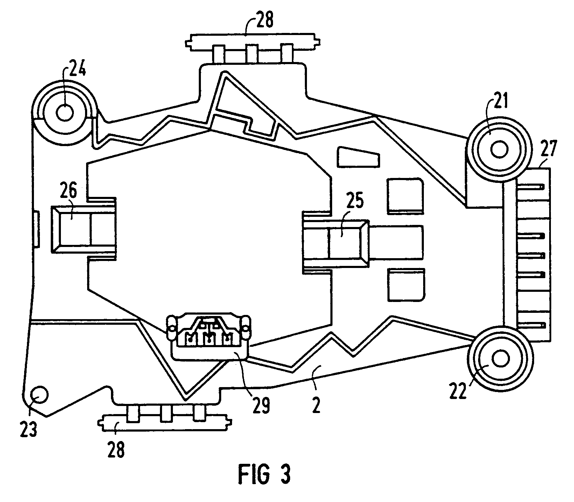

- FIG 3: eine axiale Draufsicht auf die dem Lagerschild gemäß FIG 1 zugewandte Kontaktseite des Kunststoff-Rahmens,
- FIG 4: in einem Detailausschnitt aus FIG 1 die gegenseitige Kontaktierung einer Kontaktfeder zwischen den Bürstenköchern einerseits und einer Kontaktfläche des Kunststoff-Rahmens andererseits.

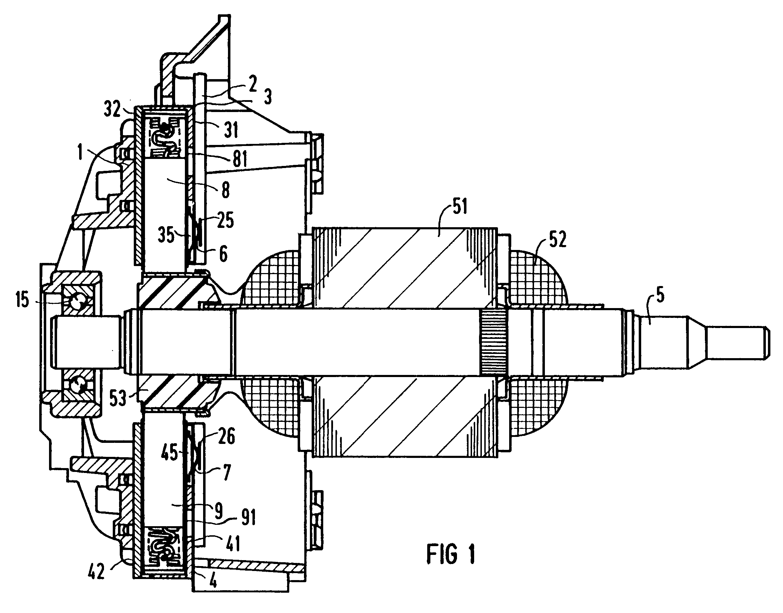

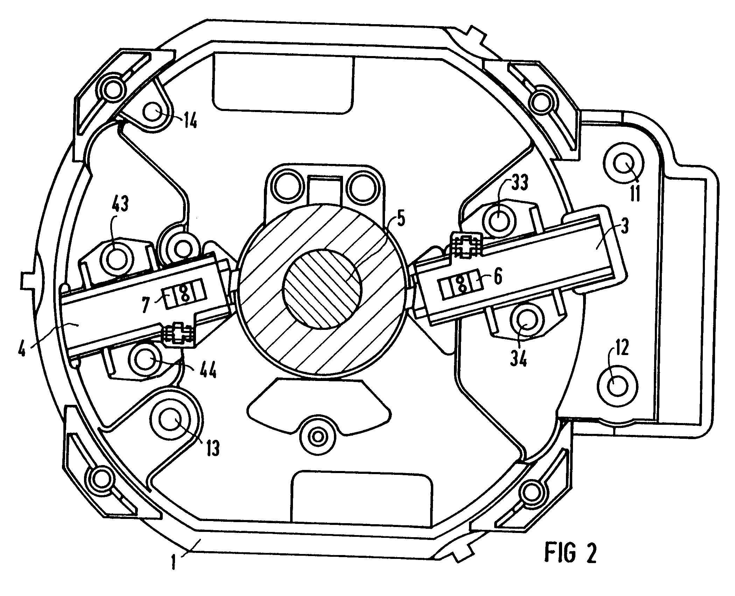

In einem B-seitigen Lagerschild 1 eines Kommutatormotors ist über ein Lager 15 eine mit einem eine Rotorwicklung 52 aufnehmenden Rotorblechpaket 51 und einem Kommutator 53 bestückte Rotorwelle 5 drehbar gelagert. Zur Hervorhebung des Erfindungswesentlichen ist ein zur Komplementierung des gesamten Kommutatormotors vorgesehenes A-seitiges Lagerschild und ein zwischen den beiden Lagerschilden festgespanntes Statorpaket mit einer schaltbaren Statorwicklung weggelassen. In dem B-seitigen Lagerschild 1 sind elektrisch isolierende Kunststoff-Bürstenkästen 3,4 befestigt, in denen Bürsten 8;9 in metallenen Bürstenköchern 81;91 geführt und unter Federdruck gegen die Oberfläche des Kommutators 53 betriebsmäßig angedrückt sind. Ein in FIG 1 nur angedeuteter und in FIG 2 in axialer Draufsicht vollständig dargestellter Kunststoff-Rahmen 2 ist den Bürstenkästen 3;4 axial vorgelagert; in Befestigungsaugen 11-14 des Lagerschildes ist der Kunststoff-Rahmen 2 mit korrespondierenden Befestigungsaugen 21-24 gehaltert.

In den Kunststoff-Rahmen 2 ist ein sogenanntes Stanzgitter eingespritzt, das insbesondere zur elektrischen Verbindung zwischen einer ebenfalls im Kunststoff-Rahmen 2 gehalterten Steckereinheit 27 für eine äußere Speiseleitung und in vorteilhafter Weise von dem Kunststoff-Rahmen 2 zusätzlich aufgenommenen Kontaktsteckern 28, denen statorseitig korrespondierende, bei der Montage des Kunststoff-Rahmens 2 in dem Lagerschild 1 kontaktierte, mit den Wicklungsteilen der Statorwicklung verbundene Gegenkontakte entsprechen, sowie einem ebenfalls nach einer Ausgestaltung der Erfindung vom Kunststoff-Rahmen 2 gehalterten Kontaktstecker 29 für einen Drehzahlsensor und insbesondere Kontaktflächen 25,26 für die Versorgung der Büsten 8;9 vorgesehen ist.

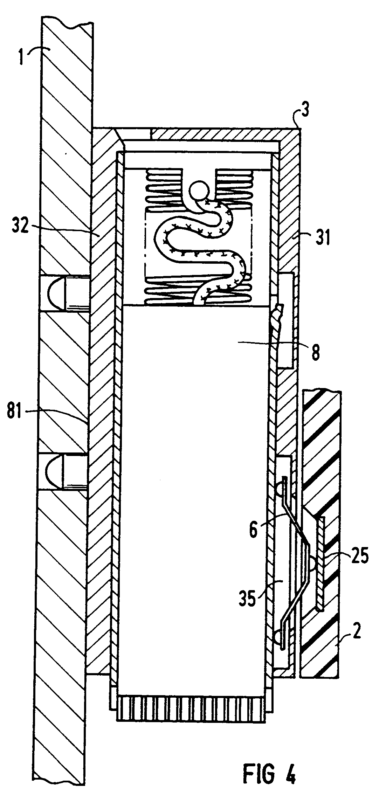

Die Kontaktflächen 25;26 dienen - wie insbes. aus dem Detailausschnitt in FIG 4 ersichtlich - zur elektrischen Verbindung mit dem die Bürsten 8;9 aufnehmenden metallenen Bürstenköcher 81;91 über eine Kontaktfeder 6,7 in Form einer Bügelfeder mit Kontakten zum Bürstenköcher 81;91 an den Bügelfederenden und Kontakten zur Kontaktfläche 25,26 des Kunststoff-Rahmens 2 am Bügelrücken. Die Kontaktfedern 6,7 sind in vorteilhafter Weise als Einzelteile in Ausnehmungen der Bürstenkästen 3;4 eingelegt.

Zur einfachen Bestückung der Bürstenkästen 3;4 mit den Kontaktfedern 6;7 und den die Bürsten 8;9 aufnehmenden Bürstenköchern 81;91 bestehen die Bürstenkästen 3,4 - wie aus FIG 4 ersichtlich - aus einem U-förmigen Kasten-Bodenteil 31 und einem lagerschildseitigen Kasten-Deckelteil 32. In dem dem Kunststoff-Rahmen 2 zugewandten Bodenteil des U-förmigen Kasten-Bodenteils 31 ist eine zur Bürstenaufnahme hin geöffnete taschenförmige Kontaktfederaufnahme 35 eingelassen, in die jeweils eine Kontaktfeder bei der Montage einlegbar und anschließend gegen ein Herausfallen durch den Einsatz des Bürstenköchers 81 gesichert ist. In dem Boden der taschenförmigen Kontaktfederaufnahme 35 in FIG 4 ist eine Durchstecköffnung für den Kontaktfederteil vorgesehen, der an der Kontaktfläche 25 des Stanzgitters im Kunststoff-Rahmen 2 zur Anlage kommt. Nach dem Einsetzen der die Bürsten 8;9 aufnehmenden Bürstenköcher 81;91 werden die Bürstenkästen 3;4 durch Aufrasten der Kasten-Deckelteile 32;42 verschlossen und anschließend werden die Bürstenkästen 3;4 an der Innenseite des Lagerschildes 1 im Sinne eines guten Wärmeüberganges großflächig befestigt. Anstelle des Kasten-Deckelteils 32;42 kann in bestimmten Anwendungsfällen zur noch besseren Wärmeabfuhr zwischen den Bürstenköchern 81;91 und dem metallenen Lagerschild 1 unter Weglassung des Kasten-Deckelteils 32;42 lediglich eine dünnschichtige elektrisch isolierende Folie zwischengelegt sein.

## Patentansprüche

1. Kommutatormotor, insbesondere zum Antrieb eines Waschautomaten, mit in einem metallenen kommutatorseitigen Lagerschild (1) gehaltenem axial eingelegten Kunststoff-Rahmen (2) mit zumindest einem Kontaktelement, insbesondere einer Steckereinheit (27) für eine äußere Speiseleitung, und mit elektrischen Verbindungsleitungen, insbesondere in Form eines eingespritzten Stanzgitters, zumindest zu auf einem Kommutator (53) schleifenden Bürsten (8;9) bzw. metallenen Bürstenköchern (81;91), wobei die in isolierenden Bürstenkästen (3;4) aufgenommenen Bürsten (8;9) bzw. Bürstenköcher (81;91) gegeneinander elektrisch isoliert in gut wärmeleitender Verbindung an dem Lagerschild (1) gehaltert und über in einem dem Kunststoff-Rahmen (2) zugewandten Wandteil der Bürstenkästen (3;4) aufgenommene Berührungskontakte (Kontaktfedern 6;7) mit korrespondierenden Gegenkontakten (Kontaktflächen 25;26) der Verbindungsleitungen des Kunststoff-Rahmens (2) durch dessen axiales Einlegen in seine Betriebslage in dem Lagerschild (1) kontaktiert sind.

2. Kommutatormotor nach Anspruch 1, mit zumindest jeweils einem eine Bürste (8;9) bzw. einen Bürstenköcher (81;91) aufnehmenden Bürstenkasten (3;4) mit einem U-förmigen Kasten-Bodenteil (31;41) und einem den Kasten-Bodenteil (31;41) lagerschildseitig verschließenden Kasten-Deckelteil (32;42).

3. Kommutatormotor nach Anspruch 1 oder 2, mit Bürstenkästen (3;4) mit einer in deren dem Kunststoff-Rahmen (2) zugewandten Wandteil in Form eines einlegbaren Einzelteils gehalterten Kontaktfeder (6;7) als Berührungskontakt zwischen der jeweiligen Bürste (8;9) bzw. dem jeweiligen Bürstenköcher (81;91) einerseits und dem jeweiligen Gegenkontakt (Kontaktfläche 25;26) des Kunststoff-Rahmens (2) andererseits.

4. Kommutatormotor nach Anspruch 3, mit einer lagerschildseitig bestückbaren taschenförmigen Kontaktfederaufnahme (35;45) im Boden des dem Kunststoff-Rahmen (2) zugewandten Wandteils des Bürstenkastens (3;4) mit einer Durchstecköffnung in deren Boden für einen durchsteckbaren Berührungskontakt der Kontaktfeder (6;7), insbesondere für den Bügelrücken einer mit ihren Bügelenden an den Bürsten (8;9) bzw. den Bürstenköchern (81;91) jeweils anliegenden Bügelfeder, zu dem Gegenkontakt (Kontaktflächen 25;26) des Kunststoff-Rahmens (2).

5. Kommutatormotor nach einem der Ansprüche 1-4, mit an der dem Lagerschild (1) zugewandten Unterseite des Kunststoff-Rahmens (2) angeordneten Gegenkontakten in Form von mit den Verbindungsleitungen des Kunststoff-Rahmens (2) verbundenen Kontaktflächen (25;26).

6. Kommutatormotor nach einem der Ansprüche 1-5, mit einer Anlage zumindest einer Bürste (8;9) bzw. eines Bürstenköchers (81;91) an dem Lagerschild (1) lediglich unter Zwischenlage einer elektrischen Isolationsfolie.

7. Kommutatormotor nach einem der Ansprüche 1-6, mit an dem Kunststoff-Rahmen (2) angeordneten Kontaktanschlüssen, insbesondere Steckkontakten (28;28), für korrespondierende statorpaketseitig gehalterte Statorwicklungskontakte.

8. Kommutatormotor nach einem der Ansprüche 1-7, mit an dem Kunststoff-Rahmen (2) angeordneten Kontaktanschlüssen, insbesondere Steckkontakten (29), für korrespondierende Kontakte eines einem rotorseitigen Geber zugeordneten Drehzahlsensors.

9. Kommutatormotor nach einem der Ansprüche 1-8, mit in axialer Montagerichtung gegenseitiger elektrischer Kontakttierung zwischen den elektrischen Verbindungsleitungen des Kunststoff-Rahmens (2) einerseits und den Bürsten (8;9) bzw. den Bürstenköchern (81;91) und/oder der Statorwicklung und/oder dem Drehzahlsensor andererseits.

10. Verfahren zur Montage eines Kommutatormotors nach Anspruch 1-9 mit zumindest folgenden Verfahrensschritten:
a) Vormontieren der mit Bürsten (8;9) bzw. Büstenköchern (81;91) bzw. Kontaktfedern (6;7) bestückten Bürstenkästen (3;4) an der Innenseite des B-seitigen Lagerschildes (1);
b) axiales Zuführen des Kunststoff-Rahmens (2) zu dem Lagerschild (1) mit selbsttätigem Kontaktieren der Kontaktfedern (6;7) mit den Kontaktflächen (25;26) beim Befestigen des Kunststoff-Rahmens (2) im Lagerschild (1) bzw. der elektrischen Verbindungen des Kunststoff-Rahmens (2) mit der Statorwicklung bzw. dem Drehzahlsensor;
c) axiales Zuführen des elektrisch erregenden Statorteils zu dem Lagerschild (1);
d) axiales Zuführen der mit Rotorblechpaket (51) und Kommutator (53) bestückten Rotorwelle (5);
e) axiales Zuführen des A-seitigen Lagerschildes und dessen Befestigung, insbesondere Festspannen, an dem B-seitigen Lagerschild (1).

## Claims

1. A commutator motor, in particular for driving an automatic washing machine with a plastics frame (2), supported in a metal commutator-side end plate (1) which is inserted axially, with at least one contact element, in particular a plug unit (27) for an external feed line, and with electrical connecting lines, in particular in the form of an injected punching grid, at least to brushes (8; 9) or metal brush cartridges (81; 91) sliding on a commutator (53), wherein the brushes (8; 9) or brush cartridges (81; 91) accommodated in insulating brush cases (3; 4), are electrically insulated relative to each other, and are held in a good heat-conducting connection on the end plate (1), and by way of touch contacts (contact springs 6; 7), accommodated in a wall part of the brush cases (3; 4), facing the plastics frame (2), are in contact with corresponding counter contacts (contact surfaces 25; 26) of the connecting lines of the plastics frame (2), by the axial insertion thereof into its operating position in the end plate (1).

2. A commutator motor according to claim 1, with at least a respective brush case (3; 4) accommodating a brush (8; 9) or a brush cartridge (81; 91) with a U-shaped case base part (31; 41) and a case cover part (32; 42) sealing the case base part (31; 41) on the side of the end plate.

3. A commutator motor according to claim 1 or 2, with brush cases (3; 4) with a contact spring (6; 7) in the wall part thereof facing the plastics frame (2), in the form of an insertable component part, as touch contact between the respective brush (8; 9) or the respective brush cartridge (81; 91), on the one hand, and the respective counter contact (contact surface 25; 26) of the plastics frame (2), on the other hand.

4. A commutator motor according to claim 3, with a pocket-shaped contact spring receptacle (35; 45), able to be assembled on the side of the end plate, in the base of the wall part, facing the plastics frame (2), of the brush cartridge (3; 4) having a push-through opening in the base thereof for a touch contact of the contact springs (6; 7), which contact is able to be pushed through, in particular for the back of the clamp of a clamp spring resting in each case with its clamp ends on the brushes (8; 9) or the brush cartridges (81; 91), to the counter contact (counter surfaces 25; 26) of the plastics frame (2).

5. A commutator motor according to one of claims 1 to 4, with counter contacts arranged on the lower side of the plastics frame (2) facing the end plate (1), in the form of contact surfaces (25; 26) connected to the connecting lines of the plastics frame (2).

6. A commutator motor according to one of claims 1 to 5, with a bearing at least of one brush (8: 9) or of one brush cartridge (81; 91) on the end plate (1) only with an intermediate layer of an electrical insulating film.

7. A commutator motor according to one of claims 1 to 6 with contact terminals arranged on the plastics frame (2), in particular plug contacts (28; 28), for corresponding stator winding contacts supported on the side of the stator stack.

8. A commutator motor according to one of claims 1 to 7, with contact terminals arranged on the plastics frame (2), in particular plug contacts (29), for corresponding contacts of a speed sensor associated with a sensor on the side of the rotor.

9. A commutator motor according to one of claims 1 to 8, with, in the axial assembly direction, mutual electrical contacting between the electrical connecting lines of the plastics frame (2), on the one hand, and the brushes (8; 9) or the brush cartridges (81; 91) and/or the stator winding and/or the speed sensor, on the other hand.

10. A method for assembling a commutator motor according to claims 1 to 9 with at least the following steps of method:
(a) preassembling the brush cartridges (3; 4) assembled with brushes (8; 9) or brush cartridges (81; 91) or contact springs (6; 7) on the inner side of the B-side end plate (1);
(b) axial supply of the plastics frame (2) to the end plate (1) with automatic contacting of the contact springs (6; 7) with the contact surfaces (25; 26) when securing the plastics frame (2) in the end plate (1) or of the electrical connections of the plastics frame (2) with the stator winding or the speed sensor:
(c) axial supply of the electrically excited stator part 5 to the end plate (1);
(d) axial supply of the rotor shaft (5) assembled with the rotor core stack (51) and commutator (53);
(e) axial supply of the A-side end plate and the fastening thereof, in particular clamping, on the B-side end plate (1).

## Revendications

1. Moteur à collecteur, notamment pour l'entraînement d'une machine à laver, comportant un cadre en matière plastique (2) inséré axialement, maintenu dans un flasque de palier métallique (1) situé du côté du collecteur et comportant au moins un élément de contact, notamment une unité formant connecteur (27) pour une ligne extérieure d'alimentation, et des lignes électriques de raccordement, notamment sous la forme d'une grille découpée, moulée par injection, qui sont raccordées au moins à des balais (8; 9) glissant sur le collecteur (53) ou à des logements métalliques de balais (81; 91), et dans lequel les balais (8; 9) logés dans des cages isolantes de porte-balais (3; 4) ou des logements à balais (81; 91) sont fixés en étant électriquement isolés les uns par rapport aux autres, tout en établissant une bonne liaison de conduction thermique avec le flasque de palier (1) et des contacts (ressorts de contact 6; 7), logés dans un élément de paroi, tourné vers le cadre en matière plastique (2), des cages de porte-balais (3; 4), sont en contact avec des contacts antagonistes correspondants (surfaces de contact 25; 26) des lignes de raccordement du cadre en matière plastique (2), sous l'effet de l'insertion axiale de ce cadre dans sa position de service dans le flasque de palier (1).

2. Moteur à collecteur suivant la revendication 1, comportant au moins respectivement une cage de porte-balais (3; 4) qui loge un balai (8, 9) ou un logement de balai (81; 91) et comporte un élément de fond en forme de U (31; 41) et un élément formant couvercle (32; 42), qui ferme l'élément de fond (31; 41) de la cage de porte-balais, du côté du flasque de palier.

3. Moteur à collecteur suivant la revendication 1 ou 2, comportant des porte-balais (3; 4), équipés d'un ressort de contact (6; 7), qui est maintenu dans l'élément de paroi de la cage de porte-balais, tourné vers le cadre en matière plastique (2) et se présentant sous la forme d'un élément individuel insérable, en tant que contact entre le balai respectif (8, 9) ou le logement de balai respectif (81; 91), d'une part, et le contact antagoniste respectif (surface de contact 25; 26) du cadre en matière plastique (2), d'autre part.

4. Moteur à collecteur suivant la revendication 3, comportant un logement en forme de poche (35; 45) pour ressort de contact, qui peut être monté du côté du flasque de palier, dans le fond de l'élément de paroi, tourné vers le cadre en matière plastique (2), de la cage de porte-balais (3; 4), avec une ouverture ménagée dans le fond pour le contact enfichable du ressort de contact (6; 7), notamment pour la base du ressort formant étrier appliqué respectivement, par ses extrémités, contre les balais (8; 9) ou les logements de balais (81; 91), en direction du contact antagoniste (surface de contact 25; 26) du cadre en matière plastique (2).

5. Moteur à collecteur suivant l'une des revendications 1-4, comportant des contacts antagonistes, disposés sur la face inférieure, tournée vers le flasque de palier (1), du cadre en matière plastique (2) et se présentant sous la forme de surfaces de contact (25; 26) reliées aux lignes de raccordement du cadre en matière plastique (2).

6. Moteur à collecteur suivant l'une des revendications 1-5, dans lequel au moins un balai (8; 9) ou un logement de balai (81, 91) s'applique contre le flasque de palier (1) uniquement moyennant l'interposition d'une feuille isolante électrique.

7. Moteur à collecteur suivant l'une des revendications 1-6, comportant des bornes de contact, disposées sur le cadre en matière plastique (2), notamment des contacts à enfichage (28; 28), pour des contacts correspondants d'enroulement statorique, maintenus sur le paquet du stator.

8. Moteur à collecteur suivant l'une des revendications 1-7, comportant des bornes de contact qui sont disposées sur le corps en matière plastique (2), notamment des contacts à enfichage (29) pour des contacts correspondants d'un capteur de vitesse de rotation, associé à un transmetteur monté sur le rotor.

9. Moteur à collecteur suivant l'une des revendications 1-8, dans lequel il existe un contact électrique réciproque, dans la direction axiale de montage, entre les lignes électriques de raccordement du cadre en matière plastique (2), d'une part, et les balais (8; 9) ou les logements de balais (81; 91) et/ou l'enroulement statorique et/ou le capteur de la vitesse de rotation, d'autre part.

10. Procédé de montage d'un moteur à collecteur suivant l'une des revendications 1-9, comportant au moins les étapes opératoires suivantes :
a) montage préalable des cages de porte-balais (3; 4), équipés de balais (8; 9) ou de logements de balais (81; 91) ou de ressorts de contact (6; 7), sur la face intérieure du flasque de palier (1) situé du côté B;
b) amenée axiale du cadre en matière plastique (2) jusqu'au flasque de palier (1) avec mise en contact automatique des ressorts de contact (6; 7) avec les surfaces de contact (25, 26) lors de la fixation du cadre en matière plastique (2) dans le flasque de palier (1) ou des liaisons électriques du cadre en matière plastique (2) avec l'enroulement statorique ou le capteur de la vitesse de rotation;
c) amenée axiale de la partie du stator, réalisant l'excitation électrique, jusqu'au flasque de palier (1);
d) amenée axiale de l'arbre (5) du rotor, équipé du paquet de tôles rotoriques (51) et du collecteur (53);
e) amenée axiale du flasque de palier situé sur le côté A et fixation de ce flasque, notamment par serrage, sur le flasque de palier (1) situé sur le côté B.
